# EUROPÄISCHE PATENTSCHRIFT

(11) **EP 1 534 584 B1**
(45) Veröffentlichungstag und Bekanntmachung des Hinweises auf die Patenterteilung: **21.06.2006**
(21) Anmeldenummer: 03742961.0
(22) Anmeldetag: 27.02.2003
(51) Int. Cl.: B63B 25/28

(54) **VORRICHTUNG ZUM VERZURREN VON INSBESONDERE CONTAINERN**
CONTAINER LASHING DEVICE
DISPOSITIF POUR AMARRER DES CONTENEURS

(30) Priorität: 27.02.2002 DE 20203067 U
(43) Veröffentlichungstag der Anmeldung: 01.06.2005
(73) Patentinhaber: MacGregor-Conver GmbH, 28307 Bremen (DE)
(72) Erfinder: GLOYSTEIN, Jürgen, 28355 Bremen (DE); WIELENBERG, Johannes, 28816 Stuhr (DE); RUBERG, Horst, 28215 Bremen (DE)
(74) Vertreter: Möller, Friedrich
(86) Internationale Anmeldenummer: PCT/EP2003/002006
(87) Internationale Veröffentlichungsnummer: WO 2003/072427

(56) Entgegenhaltungen:
- DE-A- 3 939 225
- DE-A- 10 056 341
- US-A- 868 156
- US-A- 4 157 171
- US-A- 4 247 082
- US-A- 6 161 981

## Beschreibung

Die Erfindung betrifft eine Vorrichtung zum Verzurren von vorzugsweise Containern an insbesondere einem Deck von Schiffen gemäß dem Oberbegriff des Anspruchs 1.

Vor allem an Deck eines Schiffs gestaute Container, gegebenenfalls auch andere Gegenstände, werden mit Zurrstangen oder auch Zurrseilen gesichert, und zwar verzurrt. Die Zurrstangen bzw. Zurrseile werden durch spannschraubenartig ausgebildete Vorrichtungen gemäß der Erfindung gespannt

Nach dem Spannen der Zurrstangen bzw. Zurrseile muss die Vorrichtung gegen Lösen gesichert werden, damit sie sich nicht ungewollt während des Transports der gesicherten Container oder sonstiger Gegenstände löst. Eine zuverlässige Sicherung der Vorrichtung gegen Lösen ist vor allem wichtig, wenn diese an Bord von Schiffen eingesetzt wird. Wegen der insbesondere vom Seegang hervorgerufenen Bewegungen des Schiffs besteht eine besonders große Gefahr des Lösens der Vorrichtung. Bei bekannten Vorrichtungen wird eine durch ein Gewinde in einem Verbindungsteil der Vorrichtung eingeschraubte Gewindestange durch eine Kontermutter gesichert. Die Kontermutter ist auf dem aus dem Verbindungsteil herausragenden, zugbelasteten Abschnitt der Gewindestange aufgeschraubt und wird nach dem Spannen der Zurrstange bzw. des Zurrseils außenseitig gegen das ein Gewinde zur Aufnahme der Gewindespindel aufweisende außenseitige Ende des Verbindungsteils geschraubt In der Praxis hat sich jedoch gezeigt, dass diese Art der Sicherung der Vorrichtung gegen Lösen nicht ausreichend ist. Selbst bei fest angezogener Kontermutter löst sich diese mit der Zeit und lässt dann ein Verdrehen des Verbindungsteils gegenüber der Gewindespindel zu.

Dadurch geht die Spannung der Zurrstange bzw. des Zurrseils verloren, wodurch sich die Verzurrung der Container insbesondere an Deck von Schiffen löst.

Ausgehend vom Vorstehenden liegt der Erfindung die Aufgabe zugrunde, eine Vorrichtung zum Verzurren von insbesondere Containern an Bord von Schiffen zu schaffen, die eine dauerhaft feste Verzurrung gewährleistet.

Eine Vorrichtung zur Lösung dieser Aufgabe weist die Merkmale des Anspruchs 1 auf. Es hat sich überraschend gezeigt, dass die erfindungsgemäße Zuordnung der Verdrehsicherung zu einem in Wesentlichen unbelasteten Bereich der Gewindespindel zu keinem allmählichen Lösen der Verdrehsicherung führt. Die Vorrichtung hält die damit verbundene Zurrstange oder das Zurrseil zuverlässig und vor allern dauerhaft auf Spannung, so dass sich die Zurrung nicht lösen kann.

Vorzugsweise ist die jeweilige Verdrehsicherung einem in das Verbindungsteil hineingeschraubten, im Wesentlichen zugunbelasteten, Endbereich, vorzugsweise einem Ende, der Gewindespindel zugeordnet. Der im Wesentlichen zugunbelastete Endbereich der Gewindespindel, insbesondere ihr stirnseitiges Ende, lässt sich besonders zuverlässig gegen Verdrehen relativ zum Verbindungsteil sichem. Der in das Verbindungsteil hineingeschraubte Endbereich der Gewindespindel ist vom Verbindungsteil her für die Verdrehsicherung gut zugänglich, wobei die Verdrehsicherung sich dem Verbindungsteil zuordnen lässt.

Gemäß einer bevorzugten Ausgestaltung der erfindungsgemäßen Vorrichtung ist die Verdrehsicherung als eine Verdrehsperre ausgebildet. Die Verdrehsperre verhindert ein Verdrehen der Gewindespindel gegenüber dem Verbindungsteil durch Formschluss. Dieser Formschluss wird über die Verdrehsperre zwischen dem Verbindungsteil und der Gewindespindel, und zwar einem im Wesentlichen unbelasteten, freien Endbereich derselben, hergestellt. Auf diese Weise kann auch bei Schwingungen, Erschütterungen oder sonstigen Bewegungen die Vorrichtung eine zuverlässige und dauerhaft wirksame Verdrehsicherung sicherstellen.

Vorzugsweise weist die Verdrehsperre ein relativ zum Verbindungsteil in Längsrichtung der Gewindespindel verschiebbares Kulissenstück auf, das mit dem Verbindungsteil verschiebbar, aber unverdrehbar, verbunden ist. Durch die Verschiebbarkeit des Kulissenstücks am Verbindungsteil kann die Verdrehsperre auf einfache Weise in eine Sperrstellung und auch eine Freigabestellung gebracht werden. Die Verschiebbarkeit der Verdrehsperre gegenüber dem Verbindungsteil hat auch zur Folge, dass sie Relativbewegungen der Gewindespindel zum Verbindungsteil folgen kann und dadurch in der Sperrstellung verbleibt.

Die formschlüssige Verbindung zwischen dem Kulissenstück und der Verdrehsperre und vorzugsweise einem stirnseitigen Ende der Gewindespindel kommt vorzugsweise durch Vorsprünge und Vertiefungen zwischen der Gewindespindel und dem Kulissenstück zustande. Dabei können die Vorsprünge am Kulissenstück angeordnet sein, während sich korrespondierende Vertiefungen am oberen Ende der Gewindestange befinden. Es ist aber auch denkbar, Vertiefungen im Kulissenstück vorzusehen und korrespondierende Erhöhungen der Stirnseite bzw, im Endbereich der Gewindespindel zuzuordnen. Ebenso können im Kulissenstück und an der Gewindestange sowohl Vorsprünge als auch Vertiefungen sowie andere einen Formschluss zwischen dem Kulissenstück und dem Ende der Gewindestange herstellende Mittel vorgesehen sein.

Es ist des Weiteren vorgesehen, dem Kulissenstück mindestens ein Arretierungsmittel zuzuordnen. Das oder jedes Arretierungsmittel hält das Kulissenstück der Verdrehsperre mindestens in der formschlüssigen Sperrstellung zur unverdrehbaren Sicherung der Gewindespindel gegenüber dem Verbindungsteil. Vorzugsweise hält das mindestens eine Arretierungsmittel das Kulissenstück auch in einer vom Ende der Gewinde der Gewindespindel beabstandeten Freigabestellung, so dass ungehindert von der Verdrehsperre zum Spannen der Zurrstange bzw. des Zurrseils die spannschlossartig ausgebildete Vorrichtung, und zwar mindestens das Verbindungsteil derselben, relativ zur Gewindespindel verdrehbar ist.

Gemäß einer alternativen Ausgestaltung der zuvor beschriebenen Vorrichtung ist die Verdrehsicherung als eine kraftschlüssig wirkende Verdrehbremse ausgebildet. Diese Verdrehbremse wirkt praktisch wie eine Kontermutter und kann im einfachsten Falle auch als eine solche ausgebildet sein. Durch die Anordnung dieser Verdrehbremse auf vorzugsweise einem im Wesentlichen unbelasteten Abschnitt der Gewindespindel wird aber erreicht, dass die Verdrehbremse die Gewindespindel dauerhaft und unter allen Einflüssen verdrehsicher gegenüber dem Verbindungsteil hält und sich mit der Zeit nicht lockert. Alternativ kann die Verdrehbremse auch am Verbindungsteil angeordnet sein, um die gleichen Vorteile zu erreichen.

Vorzugsweise verfügt die Verdrehbremse über mindestens ein Klemmorgan, das etwa quer zur Längsachse der Gewindespindel gerichtet auf diese einwirkt und sich dabei am Verbindungsteil, vorzugsweise einer Verschiebemutter oder einer fest mit dem Verbindungsteil verbundenen Mutter, die integraler Bestandteil des Verbindungsteils ist, abstützt. Ein solches Klemmorgan führt zu einer dauerhaften Verdrehsicherung, die durch das quergerichtete Einwirken auf die Gewindespindel und/oder das Abstützen an der Verschiebemutter oder auch der festen Mutter zustande kommt. Ein solches Klemmorgan lässt sich einfach lösen und führt zu keinen Schäden, wenn durch einen Bedienungsfehler gewaltsam das Verbindungsteil gegenüber der Gewindespindel verdreht wird, ohne dass das Klemmorgan vorher gelöst wurde.

Das Klemmorgan besteht im einfachsten Falle aus einer Sicherungsschraube, die mindestens teilweise aus einem weicheren Material als die Gewindespindel gebildet ist. Das weichere Material der Sicherungsschraube führt zum einem zu großen Sicherungskräften und zum anderen verhindert es eine Beschädigung der Gewindespindel. Damit ein Verschleiß der Sicherungsschraube nicht zu einem Unbrauchbarwerden derselben führt, weist die Sicherungsschraube mindestens an ihrem auf die Gewindespindel einwirkenden Ende einen Verschleißabschnitt auf.

Alternativ kann das Klemmorgan auch als ein die Gewindespindel mindestens teilweise umgreifender Klemmbügel ausgebildet sein. Der Klemmbügel führt eine kraftschlüssige Verdrehsicherung der Gewindespindel gegenüber dem Verbindungsteil dadurch herbei, dass er nach Art eines Bremsbandes mindestens den halben Umfang der Gewindespindel in der Sicherungsstellung umschlingt und dadurch eine dauerhafte Verdrehsicherung herbeiführt. Quer zur Längsrichtung der Gewindespindel erfolgende Relativbewegungen zwischen der Gewindespindel und dem Verbindungsteil werden durch die Ausbildung des Klemmorgans als Klemmbügel ausgeglichen. Dadurch bleibt die kraftschlüssige verdrehsichere Arretierung der Gewindespindel gegenüber dem Verbindungsteil dauerhaft und zuverlässig erhalten. Damit der Klemmbügel ausreichend fest gegen die Mantelfläche der Gewindespindel andrückbar ist, wird bei einer vorteilhaften Ausgestaltung der Erfindung ein Exzentertrieb vorgesehen, der den Klemmbügel nach Art einer Schlinge um die Gewindespindel herumzieht und damit eine Andrückkraft des Klemmbügels an die Gewindespindel erzeugt, die einen ausreichenden Kraftschlusses zur zuverlässigen und dauerhaften Verdrehsicherung herbeiführt.

Bevorzugte Ausführungsbeispiele der erfindungsgemäßen Vorrichtung werden nachfolgend anhand der Zeichnung näher erläutert. In der Zeichnung zeigen:
- Fig. 1: ein Beispiel für die Zurrung von Containern an Deck eines Schiffs unter Verwendung der Vorrichtung,
- Fig. 2: eine schematische Darstellung der Vorrichtung mit einem Teil einer darin eingehakten Zurrstange,
- Fig. 3: ein alternatives Ausführungsbeispiel der Vorrichtung in einer Ansicht gemäß der Fig. 2,
- Fig. 4: einen Teil der Vorrichtung mit einer Verdrehsperre in der Freigabestellung,
- Fig. 5: einen Schnitt V-V durch die Vorrichtung der Fig. 4,
- Fig. 6: eine Ansicht der Vorrichtung gemäß der Fig. 4 in einer Sperrstellung der Verdrehsperre,
- Fig. 7: einen Schnitt VII-VII durch die Vorrichtung der Fig. 6,
- Fig. 8: eine Draufsicht auf die Verdrehsperre,
- Fig. 9: ein alternatives Ausführungsbeispiel der Vorrichtung der Fig. 4 bis 8 in einer Freigabestellung der Verdrehsperre in einer Ansicht analog zur Fig. 5,
- Fig. 10: die Verdrehsperre nach der Fig. 9 in einer Sperrstellung und einer Ansicht analog zur Fig. 7,
- Fig. 11: ein weiteres Ausführungsbeispiel der Vorrichtung in einer Seitenansicht der Verdrehsperre in einer Freigabestellung,
- Fig. 12: einen Schnitt XII-XII durch die Vorrichtung der Fig. 11,
- Fig. 13: die Vorrichtung der Fig. 11 und 12 in einer Sperrstellung,
- Fig. 14: eine Seitenansicht eines Teils einer Vorrichtung nach einem weiteren Ausführungsbeispiel mit einer Verdrehsperre in einer Freigabestellung,
- Fig. 15: eine Draufsicht auf die Verdrehsperre der Fig. 14,
- Fig. 16: eine Ansicht analog zur Fig. 14 mit sich in Sperrstellung befindlicher Verdrehsperre,
- Fig. 17: eine Draufsicht auf die sich in der Sperrstellung befindliche Verdrehsperre,
- Fig. 18: einen Teil der Vorrichtung nach einem weiteren Ausführungsbeispiel der Erfindung in einer Seitenansicht,
- Fig. 19: eine Draufsicht auf eine Spindelmutter der Vorrichtung der Fig. 18,
- Fig. 20: einen teilweisen Schnitt XX-XX durch die Spindelmutter im Bereich einer Sicherungsschraube,
- Fig. 21: ein alternatives Ausführungsbeispiel der Sicherungsschraube gemäß Fig. 20,
- Fig. 22: ein nächstes Ausführungsbeispiel der Vorrichtung in einer Seitenansicht im Bereich eines Klemmbügels,
- Fig. 23: eine Draufsicht auf den Klemmbügel der Fig. 22,
- Fig. 24: einen Schnitt XXII-XXII durch den in der Fig. 22 dargestellten Teil der Vorrichtung,
- Fig. 25: einen Schnitt analog zur Fig. 24 mit dem sich in einer Freigabestellung befindlichen Klemmbügel,
- Fig. 26: ein anderes Ausführungsbeispiel der Vorrichtung in einer Seitenansicht,
- Fig. 27: ein weiteres Ausführungsbeispiel der Vorrichtung in einer Seitenansicht,
- Fig. 28: ein weiteres Ausführungsbeispiel der Vorrichtung in einer Seitenansicht, und
- Fig. 29: ein alternatives Ausführungsbeispiel der Vorrichtung in einer teilweise mittig geschnittenen Seitenansicht.

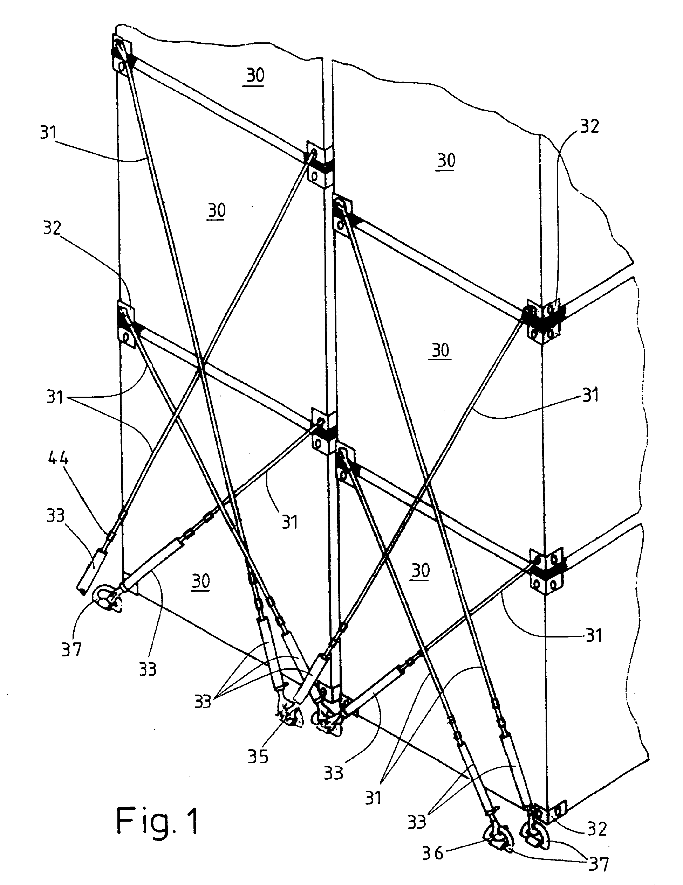

Die Fig. 1 zeigt eine Möglichkeit des Einsatzes der erfiundungsgemäßen Vorrichtungen, nämlich das Verzurren von Containern 30 an Deck eines nicht gezeigten Schiffs. Dazu sind an den Stirnseiten der beiden unteren Container 30 jedes Containerstapels Zurrstangen 31 in Eckbeschläge 32 der Container 30 eingehängt. Untere Endbereiche der Zurrstangen 31 sind mit jeweils einer erfindungsgemäßen Vorrichtung, die hier als Spannschraube 33 ausgebildet ist, verbunden. Jede Spannschraube 33 verfügt über eine Gewindespindel 34, die am unteren Ende im gezeigten Ausführungsbeispiel einen Gabelkopf 35 oder auch nur Haken 36 aufweist. Die Gewindespindeln 34 der Spannschrauben 33 sind mit den Gabelköpfen 35 bzw. den Haken 36 lösbar mit Zurraugen 37 verbunden, die fest mit dem Deck des Schiffs verbunden sind.

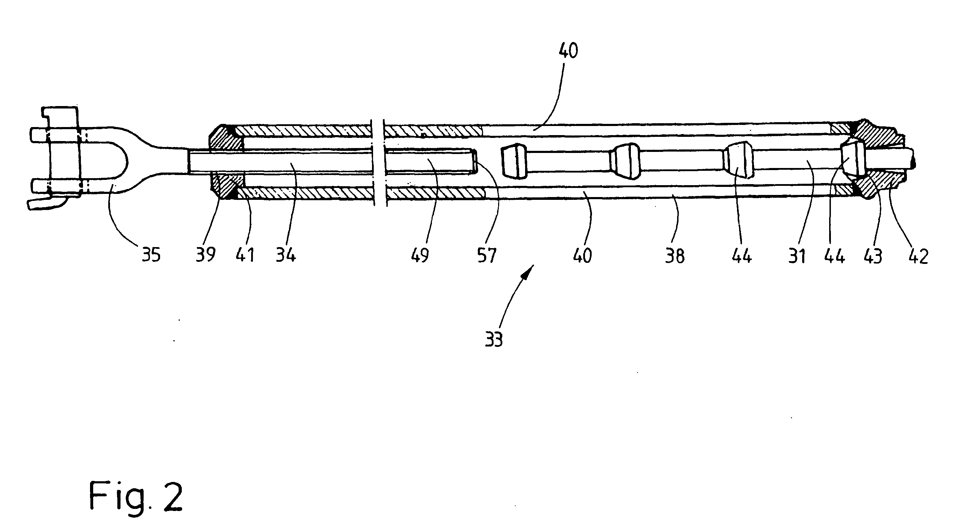

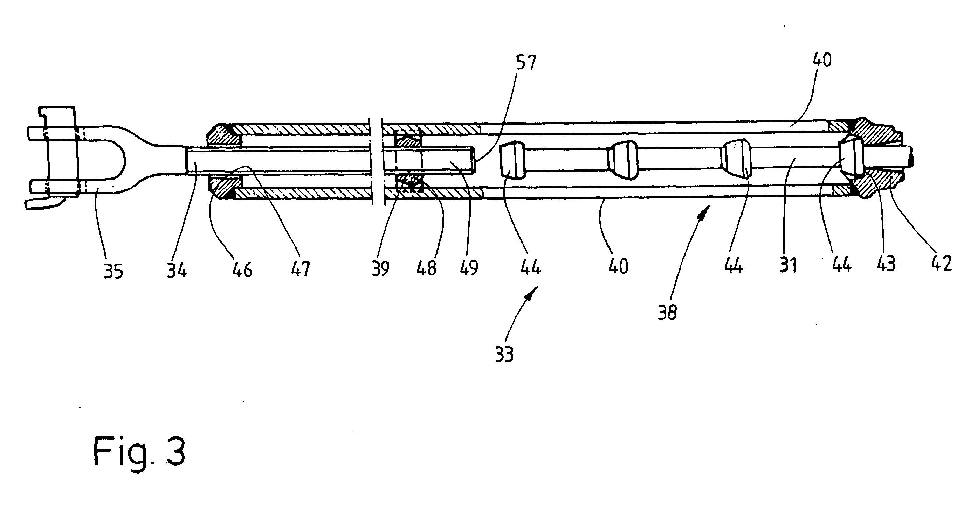

Die Fig. 2 und 3 zeigen den prinzipiellen Aufbau einer Spannschraube 33, und zwar in unterschiedlicher Ausbildung. Die erfindungsgemäßen Verdrehsicherungen sind aus Vereinfachungsgründen in den Fig. 2 und 3 noch nicht dargestellt.

Jede Spannschraube 33 verfügt über ein Verbindungsteil 38 und die Gewindespindel 34. Das Verbindungsteil 38 weist ein Gewinde 39 auf, das korrespondierend zum Außengewinde der Gewindespindel 34 ausgebildet ist. Die Gewindespindel 34 ist in das Gewinde 39 des Verbindungsteils 38 einschraubbar, wobei sich stets ein Teil des Gewindes der Gewindespindel 34 im Bereich des Verbindungsteils 38 befindet. Dieser Teil der Gewindespindel 34 ist im Wesentlichen unbelastet, nimmt insbesondere keine von der Spannschraube 33 auf die Zurrstange 31 zu übertragenden Zugkräfte (in Längsrichtung der Gewindespindel 34) auf. Ein sich außerhalb des Verbindungsteils 38 befindlicher Teil der Gewindspindel 34 weist an seinem Ende den Gabelkopf 35 auf.

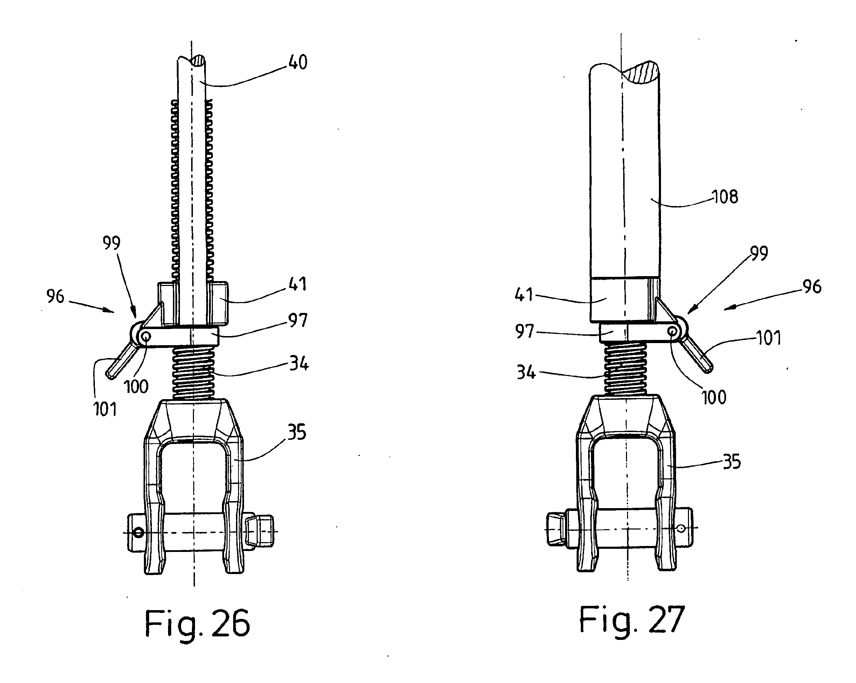

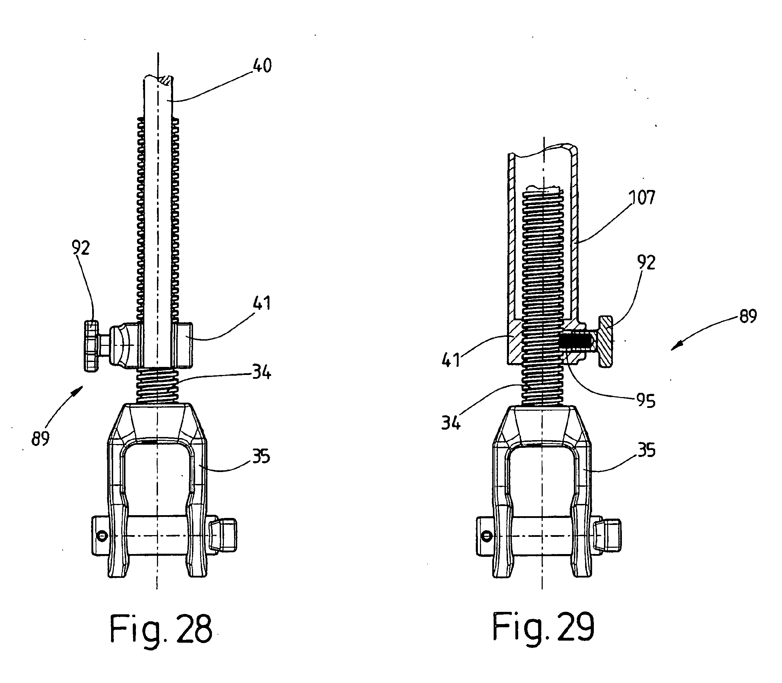

Das Verbindungsteil 38 verfügt über zwei parallele Stangen 40 mit im gezeigten Ausführungsbeispiel rundem Querschnitt. Die beiden Stangen 40 sind bei der in der Fig. 2 gezeigten Spannschraube 33 an ihren unteren Enden verbunden durch eine Festmutter 41, in der sich das Gewinde 39 zum Einschrauben der Gewindespindel 34 in das Verbindungsteil 38 befindet. Alternativ kann das Verbindungsteil an der Stelle der beiden Stangen 40 auch über ein Rohr mit vorzugsweise rundem Querschnitt (Fig. 27 und 29), aber auch anderen Querschnitten verfügen. Der gegenüber der Festmutter 41 in das Verbindungsteil 38 hineinragende (obere) Endbereich 49 der Gewindespindel 34 ist unbelastet. Die oberen Enden der Stangen 40 weisen ein an einer Seite mit einer Durchgangsöffnung versehenes Gegenlager 42 auf. Das Gegenlager 42 ist mit einem unteren Sitz 43 versehen, der eine Anlagefläche für eine Verankerungsverdickung 44 der Zurrstange 31 bildet. Im gezeigten Ausführungsbeispiel verfügt die Zurrstange 31 in ihrem unteren Endbereich über mehrere im gleichmäßigen Abstand zueinander angeordnete Verankerungsverdickungen 44, von denen wahlweise eine Verankerungsverdickung 44 sich im Sitz 43 des Gegenlagers 42 abstützt. Die Stangen 40 sind mit der Festmutter 41 und dem Gegenlager 42 vorzugsweise durch Schweißen verbunden.

Die in der Fig. 3 gezeigte Spannschraube 33 unterscheidet sich von der Spannschraube 33 der Fig. 2 dadurch, dass die Stangen 40 an ihren dem Gegenlager 42 gegenüberliegenden Enden durch ein Anschlagstück 46 verbunden sind, das eine Durchgangsbohrung 47 ohne ein Gewinde aufweist. Die Gewindespindel 34 erstreckt sich auf diese Weise freiverschieblich durch die Durchgangsbohrung 47 des Anschlagstücks 46 hindurch. Auf dem zwischen den Stangen 40 befindlichen Abschnitt der Gewindespindel 34 im Verbindungsteil 38 ist eine Verschiebemutter 47 aufgeschraubt, die ein zum Gewinde der Gewindespindel 34 korrespondierendes Gewinde 39 aufweist. Die Verschiebemutter 48 ist unverdrehbar, aber axialverschieblich zwischen den parallelen Stangen 40 des Verbindungsteils 38 gehalten. Wenn die Spannschraube 33 die Zurrstange 31 spannt, stützt sich die Verschiebemutter 48 von der Innenseite des Verbindungsteils 38 auf dem Anschlagstück 46 ab. Der (in den Figuren nach oben) aus der Verschiebemutter 48 vorstehende freie Endbereich 49 der Gewindespindel 34 ist unbelastet.

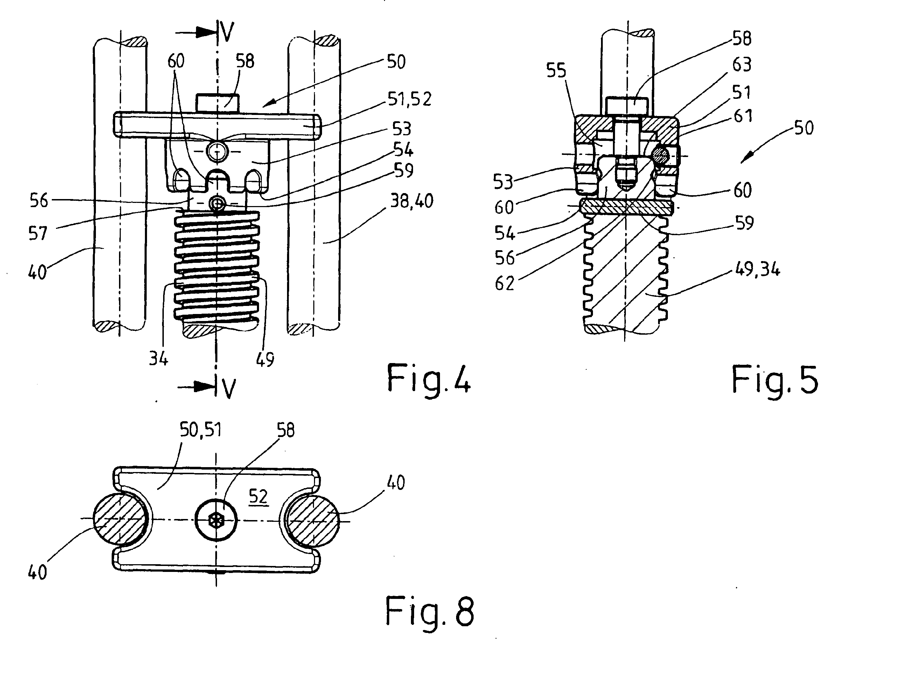

Die Fig. 4 bis 25 zeigen verschiedene Verdrehsicherungen der Gewindespindel 34. Die Verdrehsicherungen können sowohl bei der Spannschraube 33 der Fig. 2 als auch der Fig. 3 zum Einsatz kommen. Alle Verdrehsicherungen sind dem sich im Verbindungsteil 38 befindlichen (oberen) Endbereich 49 der Gewindespindel 34 zugeordnet. Der obere Endbereich 49 der Gewindespindel 34 ist derjenige, der bei der Spannschraube 33 der Fig. 2 durch das Gewinde 39 der Festmutter 41 in das Verbindungsteil 38 hineingeschraubt ist. Bei der Spannschraube 33 der Fig. 3 befindet sich der obere Endbereich 49 oberhalb der Verschiebemutter 48. Solche oberen Endbereiche 49 der Gewindespindeln 34 der Fig. 2 und 3 sind im Wesentlichen unbelastet. Insbesondere treten im oberen Endbereich 49 keine Zugkräfte auf, die in Folge der Zurrung auf die Zurrstange 31 und die Spannschraube 33 in Längsrichtung der Gewindespindel 34 einwirken.

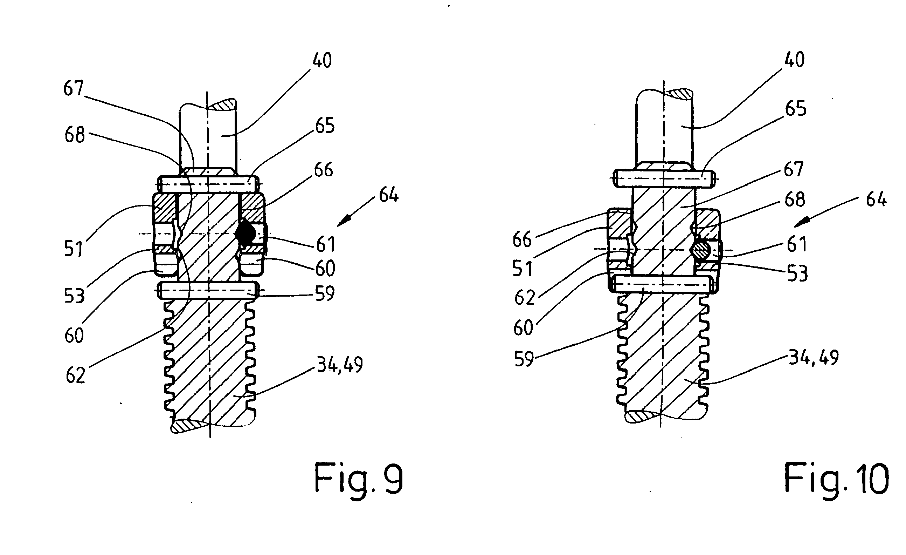

Beim Ausführungsbeispiel der Fig. 4 bis 8 ist eine formschlüssige Verdrehsicherung vorgesehen, die als Verdrehsperre 50 ausgebildet ist. Die Verdrehsperre 50 verfügt über ein die formschlüssige Verdrehsicherung herbeiführendes Kulissenstück 51, das auf- und abbewegbar, aber unverdrehbar zwischen den parallelen Stangen 40 des Verbindungsteils 38 angeordnet ist (Fig. 8). Dazu verfügt das Kulissenstück 51 über eine rechteckförmige Deckplatte 52, die an ihren Schmalseiten mit etwa halbkreisförmigen Ausnehmungen versehen ist. Diese Ausnehmungen sind korrespondierend zum Durchmesser der Stangen 40 ausgebildet. Dadurch ist das Kulissenstück 51 mit der Deckplatte 52 formschlüssig, und zwar unverdrehhbar, zwischen den Stangen 40 gehalten. Unterhalb der Deckplatte 52 ist ein zylindrischer Kupplungsansatz 53 vorgesehen. Dieser ist vorzugsweise einstückig mit der Deckplatte 52 verbunden. Der Kupplungsansatz 53 weist im Inneren eine von der unteren Stirnseite 54 ausgehende Sackbohrung 55 auf. Die Sackbohrung 55 ist korrespondierend zu einem Zylinderfortsatz 56 auf der oberen Stirnfläche 57 der Gewindespindel 34 ausgebildet. Das Kulissenstück 51 ist mit dem Kupplungsansatz 53 auf den Zylinderfortsatz 56 am oberen Ende der Gewindespindel 34 aufsteckbar.

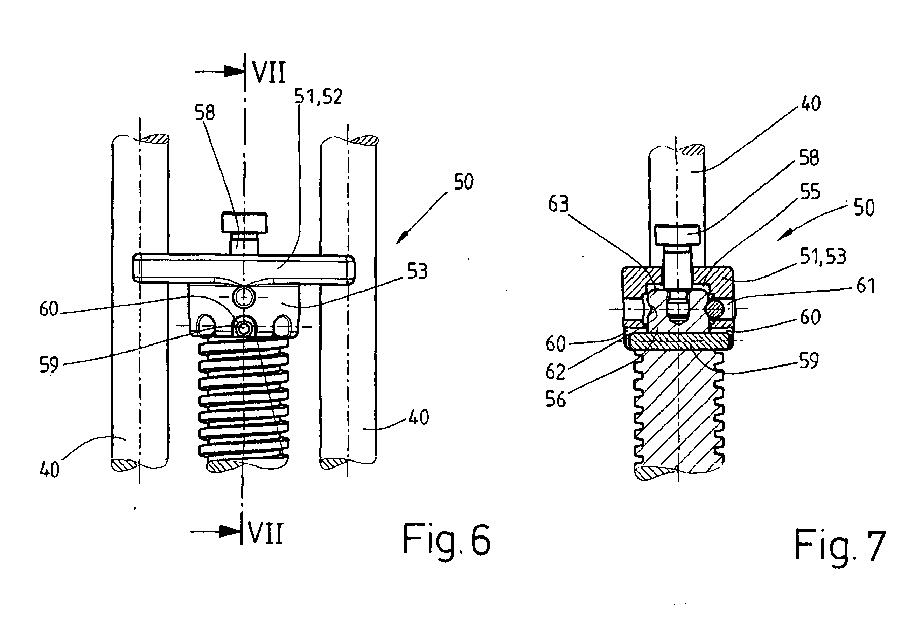

Von oben ist mittig durch die Deckplatte 52 des Kulissenstücks 51 eine Anschlagschraube 58 in den Zylinderfortsatz 56 der Gewindespindel 34 eingeschraubt (Fig. 5, 7). Die Anschlagschraube 58 ist in der Länge so bemessen, dass sie eine Auf- und Abbewegung des Kulissenstücks 51 relativ zu den Stangen 40 des Verbindungsteils 38 und der Gewindespindel 34 zulässt, wobei der Weg dieser Auf- und Abbewegung durch die Anschlagschraube 58 auf ein erforderliches Maß begrenzt ist.

Am unteren Ende des Zylinderfortsatzes 56 auf der Stirnfläche 57 der Gewindespindel 34 sind zwei gegenüberliegende Vorsprünge vorgesehen. Im gezeigten Ausführungsbeispiel sind die Vorsprünge gebildet durch einen Zylinderstift 59, der quer zur Längsachse der Gewindespindel 34 durch dieselbe hindurch geführt ist, und zwar so, dass er sich am unteren Bereich des Zylinderfortsatzes 56 über der Stirnfläche 57 des Gewindebereichs der Gewindespindel 34 befindet (Fig. 4 und 5). Der Zylinderstift 59 weist eine Länge auf, die gleich oder etwas größer ist als der Durchmesser der Gewindespindel 34 im Gewindebereich. Dadurch stehen gegenüberliegende Enden des Zylinderstifts 59 an gegenüberliegenden Seiten über die Zylinderfläche des Zylinderfortsatzes 56 vor zur Bildung der eingangs erwähnten gegenüberliegenden Vorsprünge am oberen Ende der Gewindespindel 34.

Der Kupplungsansatz 53 des Kulissenstücks 51 verfügt über Vertiefungen, die korrespondierend zu den Erhöhungen an der Gewindespindel 34 ausgebildet sind. Im gezeigten Ausführungsbeispiel weist der Kupplungsansatz 53 acht von seiner unteren Stirnseite 54 ausgehende Nuten 60 auf. Die Nuten 60 verfügen über eine Tiefe, die mindestens dem Durchmesser des Zylinderstifts 59 entspricht. Dadurch, dass acht gleich ausgebildete Nuten 60 vorgesehen sind, die gleichmäßig auf den Umfang der auf der Stirnseite 54 des Kupplungsansatzes 53 verteilt sind, kann die Gewindespindel 34 nach jeder Achtelkreisdrehung vom Kulissenstück 51 der Verdrehsperre 50 formschlüssig arretiert werden.

Durch Hochziehen des Kulissenstücks 51 der Verdrehsperre 50 gegen den als Anschlag dienenden Kopf der Anschlagschraube 58 gelangt die Verdrehsperre 50 in eine Freigabestellung, in der die Gewindespindel 34 zum Zusammendrehen bzw. Auseinanderdrehen der Spannschraube 33 verdreht werden kann (Fig. 4 und 5). Wird die Verdrehsperre 50 heruntergedrückt gegen die obere Stirnfläche 57 der Gewindespindel 34, gelangen bei entsprechender Relativposition der Gewindespindel 34 zwei gegenüberliegende Nuten 60 an der unteren Stirnseite 54 des Kupplungsansatzes 53 in Eingriff mit den vorstehenden Enden des Zylinderstifts 59. Dabei gelangt die Verdrehsperre 50 in ihre Sperrstellung (Fig. 6 und 7), in der die Gewindespindel 34 durch Formschluss unverdrehbar gegenüber dem Verbindungsteil 38 der Spannschraube 33 arretiert wird.

Um zu verhindern, dass die Verdrehsperre 50 ungewollt, also selbsttätig, von der Sperrstellung in die Freigabestellung oder umgekehrt gelangt, ist die Verdrehsperre 50 sowohl in der Sperrstellung (Fig. 6 und 7) als auch in der Freigabestellung (Fig. 4 und 5) durch ein Arretierungsmittel arretierbar. Bei diesem Arretierungsmittel handelt es sich im gezeigten Ausführungsbeispiel um ein federndes Druckstück 61. Eine federnd in Richtung zur Längsmittelachse der Gewindespindel 34 vorgespannte Kugel des federnden Druckstücks 61 greift in der Sperrstellung teilweise in eine umlaufende dreieckförmige Nut 62 an der Außenseite des Zylinderfortsatzes 56 ein. Bei sich in der Freigabestellung befindlicher, hochgeschobener, Verdrehsperre 50, wenn die gegenüberliegenden Vorsprünge des Zylinderstifts 59 der Gewindespindel 34 mit keiner Nut 60 an der unteren Stirnseite 54 des Kupplungsansatzes 53 in Eingriff stehen, arretiert das federnde Druckstück 61 die Verdrehsperre 50 dadurch, dass sich die Kugel auf einem Randbereich einer oberen Stirnseite 63 des Zylinderfortsatzes 56 an der Gewindespindel 34 abstützt (Fig. 5).

Die Fig. 9 und 10 zeigen eine Verdrehsperre 64, die sich von der Verdrehsperre 50 nur dadurch unterscheidet, dass an der Stelle der Anschlagschraube 58 ein Begrenzungsstift 65 vorgesehen ist. Im Übrigen werden für gleiche Teile gleiche Bezugsziffern verwendet.

Durch das ganze Kulissenstück 51, nämlich die Deckplatte 52 und den Kupplungsansatz 53, erstreckt sich eine zylindrische Durchgangsbohrung 66. Durch die Durchgangsbohrung 66 ist ein verlängerter Zylinderfortsatz 67 am oberen Ende des Gewindeabschnitts der Gewindespindel 34 geführt. Der Zylinderfortsatz 67 weist eine Länge auf, die so bemessen ist, dass bei sich in der Freigabestellung befindlichem, hochgeschobenen Kulissenstück 51 ein oberer Endbereich des Zylinderfortsatzes 67 oben aus der Deckplatte 52 herausragt. Durch diesen oberen Teil des Zylinderfortsatzes 67 erstreckt sich quer zur Längsachse der Gewindespindel 34 der Begrenzungsstift 65, der mit gegenüberliegenden Enden aus dem Zylinderfortsatz 67 herausragt. Unter diesen aus dem Zylinderfortsatz 67 herausragenden Enden des Begrenzungsstifts 65 schlägt die Oberseite der Deckplatte 52 der Verdrehsperre 64 in der Freigabestellung an (Fig. 9).

Dem federnden Druckstück 61 ist bei der hier gezeigten Verdrehsperre 64 eine zweite umlaufende dreieckförmige Nut 68 zugeordnet, die sich oberhalb der Nut 62 zur Arretierung der Verdrehsperre 64 in der Sperrstellung befindet (Fig. 10). In die Nut 68 rastet die Kugel des federnden Druckstücks 61 ein, wenn sich die Verdrehsperre 64 in der Freigabestellung befindet (Fig. 9).

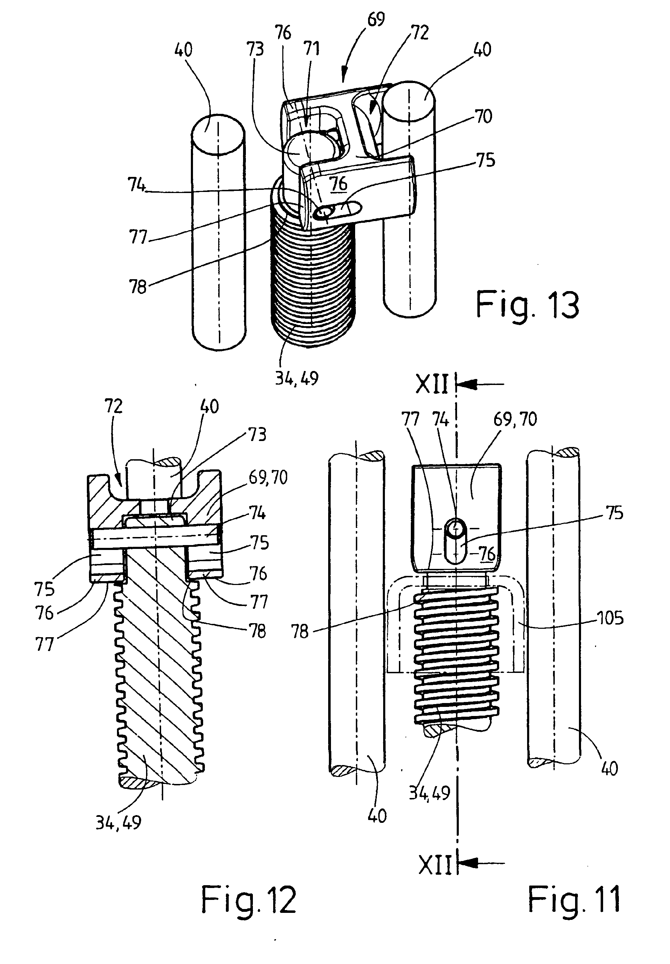

Die Fig. 11 bis 13 zeigen ein Ausführungsbeispiel der Erfindung mit einer formschlüssigen Verdrehsperre 69, die einen schwenkbaren Knebel 70 aufweist. Der Knebel 70 weist eine etwa H-förmige Gestalt auf mit zwei gegenüberliegenden Gabeln 71, 72. Der unbelastete (obere) Endbereich 49 der Gewindespindel 34 ist am oberen Ende auch hier mit einem im Durchmesser verringerten Zylinderfortsatz 73 versehen. Quer durch den Zylinderfortsatz 73 erstreckt sich ein Zylinderstift 74, der mit gegenüberliegendem Endbereich aus dem Zylinderfortsatz 73 herausragt. Die gegenüber dem Zylinderfortsatz 73 beidseitig vorstehenden Bereiche des Zylinderstifts 74 erstrecken sich in Langlöcher 75 in gegenüberliegenden Gabelschenkel 76 einer Gabel 71 des Knebels 70. Die Langlöcher 75 verlaufen senkrecht, wenn der Knebel 70 hochgeschwenkt ist, wobei sich die Gabeln 71, 72 übereinander befinden (Fig. 11). Dabei liegen ebene Endflächen 77 der Gabelschenkel 76 auf der den Zylinderfortsatz 73 ringförmig umgebenden oberen Stirnfläche 78 des Endes des Gewindebereichs der Gewindespindel 34 auf. Der Zylinderstift 74 befindet sich dabei in oberen Endbereichen der Langlöcher 75 (Fig. 11). Die senkrechte Position des Knebels 70 entspricht der Freigabestellung der Verdrehsperre 69, wobei der Knebel 70 in dieser Freigabestellung arretiert ist durch die Anlage der Endflächen 77 an der oberen Stirnfläche 78. In dieser Stellung des Knebels 70 lässt die Verdrehsperre 69 ein Verdrehen der Gewindespindel 34 gegenüber dem Verbindungsteil 38 zu. Dazu ist die Breite des Knebels 70 so bemessen, dass dieser in seiner aufrechten Position (Fig. 11) zwischen den Stangen 40 des Verbindungsteils 38 hindurchbewegbar ist und somit die Verdrehsperre 69 um ihre aufrechte Achse ungehindert zwischen den Stangen 40 vollkreisig verdrehbar ist.

Wird der Knebel 70 der Verdrehsperre 69 hochgezogen, wodurch die Enden des Zylinderstifts 74 in den unteren Bereich der Langlöcher 75 gelangen, lässt sich der Knebel 70 um 90° in eine etwa horizontale Position verschwenken, nämlich umklappen. Dabei gelangt eine Stange 40 des Verbindungsteils 38 in den Bereich der zweiten Gabel 72, wodurch der Knebel formschlüssig ein Verdrehen der Gewindespindel 34 gegenüber dem Verbindungsteil 38 verhindert (Fig. 13). Der dadurch die Sperrstellung einnehmende Knebel 70 der Verdrehsperre 69 wird in dieser Sperrstellung durch sein Eigengewicht, nämlich schwerkraftbedingt, arretiert.

In der Fig. 11 ist strich-punktiert eine gegebenenfalls unter dem Knebel 70 auf den Zylinderfortsatz 73 am oberen Ende der Gewindespindel 34 aufgesetzte Führungshülse 105 dargestellt. Diese hält das obere Ende der Gewindespindel 34 etwa mittig zwischen den Stangen 40, und zwar vor allem dann, wenn sich der Knebel 70 in der Freigabestellung (Fig. 11) befindet. An der Stelle der Führungshülse 105 kann auch eine unverdrehbar zwischen den Stangen 40 angeordnete Kulissenplatte vorgesehen sein, die ähnlich wie das plattenartige Kulissenstück 51 (Fig. 4 und 8) ausgebildet ist.

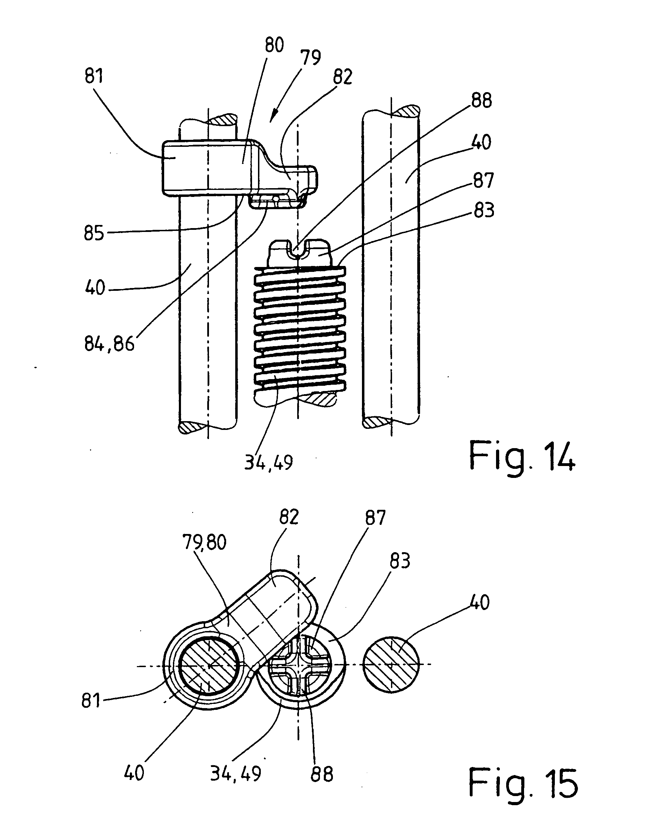

Die Fig. 14 bis 17 zeigen eine Verdrehsperre 79 zur formschlüssigen unverdrehbaren Arretierung der Gewindespindel 34 gegenüber dem Verbindungsteil 38. Diese Verdrehsperre 79 besteht im Wesentlichen nur aus einem Schwenkarm 80, der auf einer Stange 40 des Verbindungsteils 38 auf- und abbewegbar und verschiebbar gelagert ist (Fig. 14). Dazu verfügt der Schwenkarm 80 über einen Ringbereich 81, der die eine Stange 40 voll-ständig umgibt. An den Ringbereich 81 des Schwenkarms 80 ist ein Kragarm 82 angeformt, der senkrecht zur Längsachse der Stange 40 gerichtet gegenüber dem Ringbereich 81 vorsteht. Der Kragarm 82 ist so lang ausgebildet, dass er die obere Stirnfläche 83 am oberen Ende des zugunbelasteten Endbereichs 49 der Gewindespindel 34 übergreifen kann. Unter dem Kragarm 82 befindet sich in der Nähe seines freien außen-liegenden Endes ein etwa zylindrischer Vorsprung 84, der an seiner Unterseite 85 mit einer kreuzartigen Erhöhung 86 bzw. Profilierung versehen ist.

Auf der oberen Stirnfläche 83 der Gewindespindel 34 befindet sich ebenfalls ein zylindrischer Vorsprung 87, der auf der Oberseite profiliert ist, nämlich im gezeigten Ausführungsbeispiel eine kreuzartige Vertiefung 88 aufweist. Die Stege sind korrespondierend zur kreuzartigen Erhöhung 86 im Vorsprung 84 des Kragarms 82 der Verdrehsperre 79 ausgebildet.

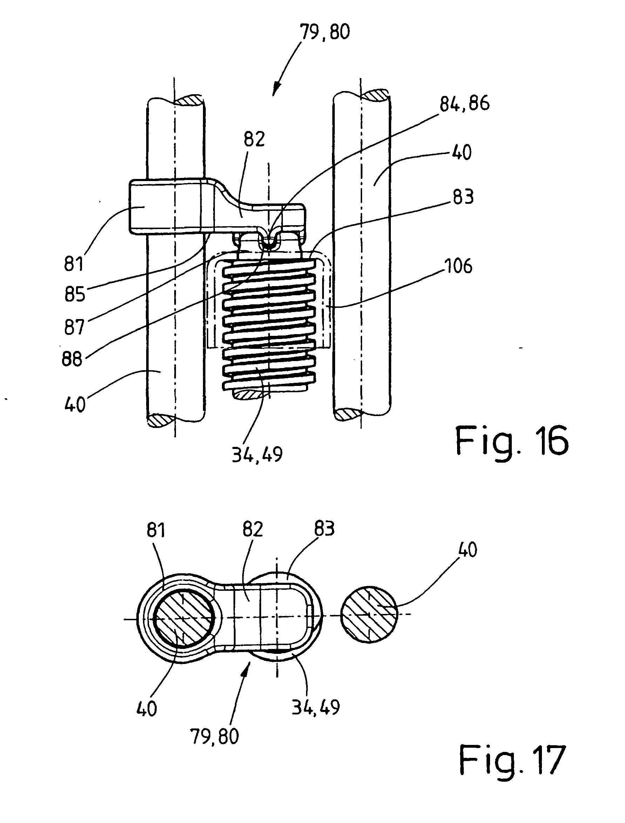

In der Sperrstellung wird der Schwenkarm 80 der Verdrehsperre 79 so gegenüber der Stange 40 verdreht, dass die Unterseite 85 des Kragarms 82 auf der oberen Stirnfläche 83 am oberen, im Wesentlichen unbelasteten Ende der Gewindespindel 34 anliegt. Dabei greift die kreuzartige Vertiefung 88 auf dem Vorsprung 87 der Gewindespindel 34 formschlüssig in die kreuzartige Erhöhung 86 in der Unterseite 85 des Vorsprungs 84 unter dem Kragarm 82 ein (Fig. 16). Auf diese Weise kommt eine formschlüssige Verdrehsicherung der Gewindespindel 34 gegenüber dem Verbindungsteil 38 zustande.

In der Freigabestellung ist die Verdrehsperre 79 auf der Stange 40 hochgeschoben, und zwar so weit, dass die Erhöhung 86 unter dem Kragarm 82 außer Eingriff mit der Vertiefung 88 am Vorsprung 87 der Gewindespindel 34 gelangen. Die Gewindespindel 34 ist dann frei verdrehbar. Zur Sicherung gegen ein unbeabsichtigtes Heruntergleiten der Verdrehsperre 79 auf der Stange 40 in die Sperrstellung wird die Verdrehsperre 79, nämlich der Schwenkarm 80, nicht nur durch Hochbewegen an der Stange 40, sondern auch durch ein Verdrehen gegenüber der Stange 40 in die Freigabestellung gebracht (Fig. 15). Dann kann durch ein unbeabsichtigtes Heruntergleiten des Schwenkarms 80 an der Stange 40 die Verdrehsperre 79 nicht unbeabsichtigt in die Sperrstellung gelangen. Gesichert wird der Schwenkarm 80 der Verdrehsperre 79 in der Sperrstellung wiederum durch sein Eigengewicht.

Der den die Stange 40 vollständig umgebende Ringbereich 81 der Verdrehsperre 79 erfordert ein Aufschieben des Schwenkarms 80 auf die betreffende Stange 40, bevor diese mit dem Gegenlager 42 und der Festmutter 41 bzw. dem Anschlagstück 46 verschweißt wird. Ein Austausch eines beschädigten oder verschlissenen Schwenkarms 80 ist dann nachträglich nicht mehr möglich. Aus diesem Grunde kann nach einem alternativen (nicht gezeigten) Ausführungsbeispiel der Erfindung der Schwenkarm 80 der Verdrehsperre 79 an der Stelle des Ringbereichs 81 eine nach außen offene U-förmige Gabel aufweisen, das nach dem Aufsetzen des Schwenkarms 80 auf die Stange 40 durch eine Schraube, einen Stift oder auch ein Füllstück verschlossen wird. Eine solche Verdrehsperre 79 ist im Falle einer Beschädigung oder eines Verschleißes von der Stange 40 lösbar und kann problemlos durch eine neue Verdrehsperre 79 ausgetauscht werden.

In der Fig. 16 ist eine gegebenenfalls auf den Vorsprung 87 am freien oberen Ende der Gewindespindel 34 aufsetzbare Führungshülse 106 punkt-strichliniert angedeutet. Damit ist die Gewindespindel 34 etwa mittig zwischen den Stangen 40 abstützbar, insbesondere wenn der Kragarm 82 sich in der oberen Freigabestellung (Fig. 14) befindet. An der Stelle der Führungshülse 106 kann auch eine Kulissenplatte zum Einsatz kommen, die ähnlich wirkt und ausgebildet ist wie das Kulissenstück 51 der Fig. 4 und 8.

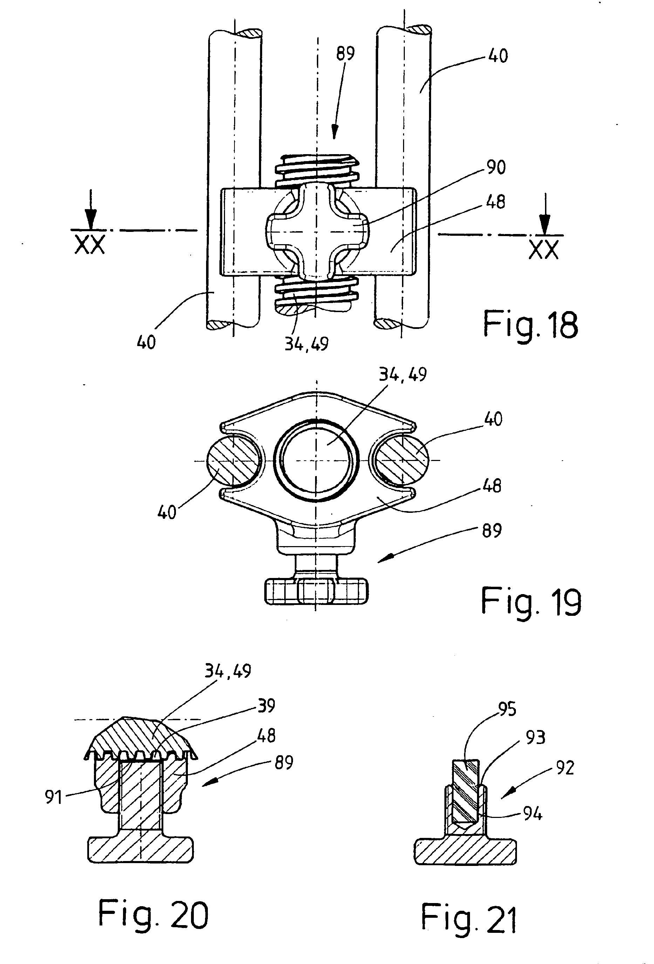

Die Fig. 18 bis 21 zeigen ein Ausführungsbeispiel der erfindungsgemäßen Vorrichtung, nämlich der Spannschraube 33, bei dem die Verdrehsicherung durch eine kraftschlüssig wirkende Verdrehbremse 89 gebildet ist. Im gezeigten Ausführungsbeispiel ist die Verdrehbremse 89 der Verschiebemutter 48 der Spannschraube 33 zugeordnet. Gebildet ist die Verdrehbremse 89 aus einer Schraube 90, die quer zur Längsmittelachse der Gewindespindel 34 gerichtet von außen in ein entsprechendes Innengewinde der Verschiebemutter 48 eingedreht ist (Fig. 20). Die Längsmittelachse der Schraube 90 schneidet dabei rechtwinklig die Längsmittelachse der Gewindespindel 34. Das Innengewinde zur Aufnahme der Schraube 90 erstreckt sich einseitig durch die Verschiebemutter 48. Dadurch kann ein Schraubenende 91 der Schraube 90 bei entsprechend weitem Eindrehen in die Verschiebemutter 48 zur Anlage an die Außenseite des durch die Verschiebemutter 48 geschraubten Gewindes der Gewindespindel 34 gelangen, wobei dieser Bereich der Gewindespindel 34 im Wesentlichen unbelastet ist.

Die Schraube 90 kann vollständig aus Kunststoff oder einem anderen Material mit einer geringeren Härte als das Gewinde der Gewindespindel 34 gebildet sein. Ein solches Material hat einen verhältnismäßig hohen Reibbeiwert, wodurch mit der Verdrehbremse 89 eine ausreichend große Bremskraft aufbringbar ist. Des Weiteren wird durch das weichere Material der Schraube 90 die Gefahr einer Beschädigung der Gewindespindel 34, insbesondere des äußeren Gewindes desselben, zuverlässig vermieden, weil ein eventueller Verschleiß beim Aufbringen der Klemmkräfte durch die Verdrehbremse 89 am Kopf der Schraube 90 auftritt. Die Schraube 90 ist mit einer Länge versehen, die größer ist als notwendig, wodurch ein eventueller Verschleiß durch weiteres Hineindrehen der Schraube 90 in die Verschiebemutter 48 kompensierbar ist.

Die Fig. 21 zeigt eine Schraube 92 als Alternative zur vorstehend beschriebenen Schraube 90. Die Schraube 92 besteht im Wesentlichen aus einem harten, verschleißfesten Material, beispielsweise ein Metall, aus dem auch die Verschiebemutter 48 gebildet ist. In eine Stirnseite 93 des Gewindeabschnitts der Schraube 92 befindet sich eine Sackbohrung 94, in die ein Verschleißteil 95 eingesetzt ist. Beim Verschleißteil 95 kann es sich im einfachsten Falle um einen zylindrischen Stopfen aus Kunststoff oder Hartgummi handeln. Das Verschleißteil 95 weist eine größere Länge als die Sackbohrung 94 auf, so dass es deutlich gegenüber der Stirnseite 93 des Gewindeteils der Schraube 92 vorsteht.

Dieser vorstehende Abschnitt des Verschleißteils 95 kann mit der Zeit verschleißen. Ist der gesamte vorstehende Bereich des Verschleißteils 95 abgetragen, braucht nicht die gesamte Schraube 92 ersetzt zu werden. Es ist lediglich das Verschleißteil 95 auszuwechseln.

Die in den Fig. 18 bis 21 gezeigte Verdrehbremse 89 kann alternativ auch seitlich in die Festmutter 41 der Spannschraube 33 der Fig. 2 eingedreht sein, so wie es in der Fig. 28 dargestellt ist. Es ist auch denkbar, der Verschiebemutter 48 ein in Längsrichtung der Stangen 40 verschiebbares Kulissenstück ohne Innengewinde nach Art des Kulissenstücks 51 der Fig. 4 zuzuordnen, wobei das Kulissenstück die Verdrehbremse 89 aufweist. Ein solches Kulissenstück wäre wiederum auf einem im Wesentlichen zugunbelasteten oberen Endbereich 49 der Gewindespindel 34 anzuordnen, also oberhalb der Verschiebemutter 48 oder der Festmutter 41. Die Verdrehbremse 89 kann auch in das Anschlagstück 46 der Spannschraube 33 der Fig. 3 eingedreht sein. Schließlich kann die Verdrehbremse 89 auch seitlich in eine mit dem unteren Ende eines Rohrs 107 verbundene Festmutter 41 eingeschraubt sein (Fig. 29).

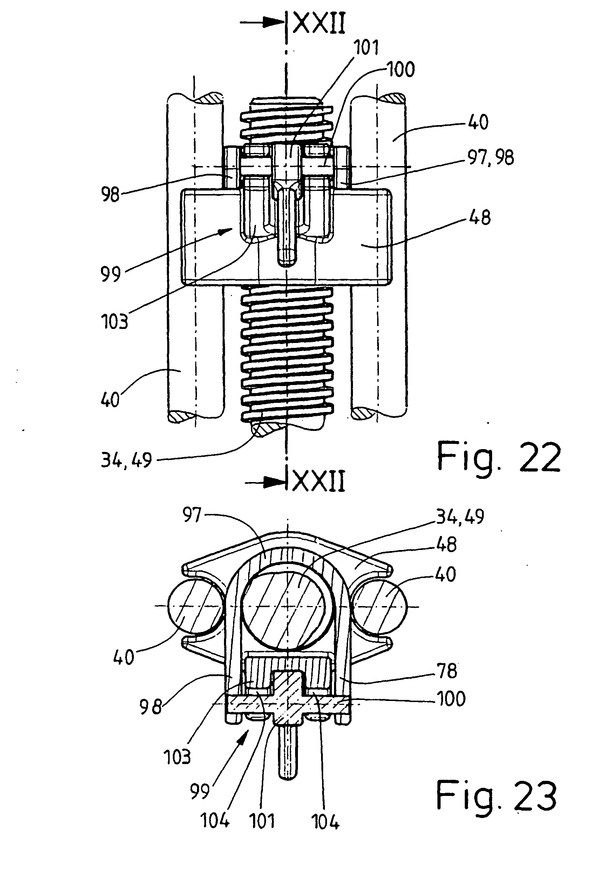

Die Fig. 22 bis 25 zeigen eine Verdrehbremse 96, die wiederum der Verschiebemutter 48 zugeordnet ist. Die Verdrehbremse 96 weist einen in etwa U-förmigen Klemmbügel 97 auf, der oberhalb der Verschiebemutter 48 angeordnet ist. Dadurch ist der Klemmbügel 97 der Verdrehbremse 96 dem im Wesentlichen unbelasteten oberen Endbereich 49 der Gewindespindel 34 zugeordnet. Der U-förmige Klemmbügel 97 auf der Verschiebemutter 48 erstreckt sich zwischen den beiden parallelen Stangen 40 des Verbindungsteils 38 hindurch, wobei eine offene Seite des Klemmbügels 97 begrenzende parallele Schenkel 98 nach außen weisen. An den Endbereichen der parallelen Schenkel 98 ist ein Exzentertrieb 99 gelagert. Eine horizontale Exzenterwelle 100 erstreckt sich drehbar durch entsprechende Lagerbohrungen der gegenüberliegenden Schenkel 98 des Klemmbügels 97 hindurch. Ein auf der Exzenterwelle 100 sitzender, verschwenkbarer Exzenterhebel 101 stützt sich an einer aufrechten Gleitfläche 102 ab. Die Gleitfläche 102 ist in einem seitlich an der Verschiebemutter 48 einstückig angeformten Lagerbock 103 gebildet. Der Lagerbock 103 verfügt an gegenüberliegenden Seiten des Exzenterhebels 101 und zwischen den beiden Schenkeln 98 des Klemmbügels 97 über nach außen offene, langlochartige Ausnehmungen 104, in denen Bereiche der Exzenterwelle 100 in einer senkrecht durch die Längsmittelachse der Gewindespindel 34 verlaufenden, horizontalen Ebene senkrecht zur Längserstreckung der Gewindespindel 34 beweglich, jedoch in anderen Richtungen geführt ist.

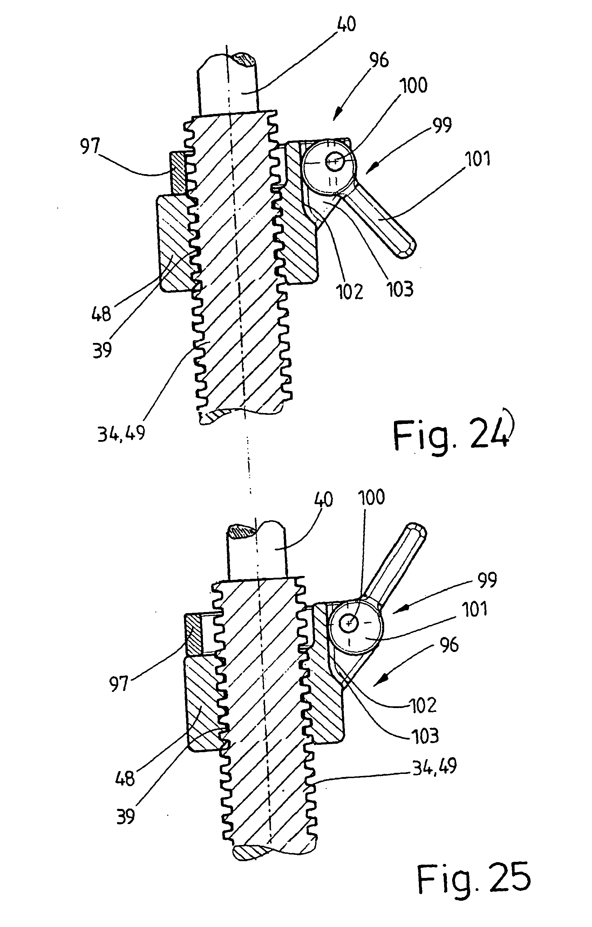

Durch Verdrehen des Exzenterhebels 101 wird der Abstand der Exzenterwelle 100 zur Gewindespindel 34 verändert und damit der Klemmbügel 97 über seine mit der Exzenterwelle 100 verbundenen Schenkel 98 auch quer zur Längsrichtung der Gewindespindel 34 bewegt. In der in den Fig. 23 und 24 gezeigten Arretierungsstellung der Verdrehbremse 96 liegt der halbkreisförmige Bogenteil des Klemmteils 97 von außen an dem im Wesentlichen unbelasteten oberen Endbereich 49 der Gewindespindel 34 an und umschlingt dabei etwa den halben Umfang der Gewindespindel 34. Durch ein entsprechendes Verschwenken des Exzenterhebels 101 wird der Klemmbügel 97 mit einer ausreichend großen Kraft gegen die Mantelfläche der Gewindespindel 34 gedrückt, um diese gegenüber dem Verbindungsteil 38 unverdrehbar kraftschlüssig zu arretieren. Die Arretierung des Exzentertriebs 99 erfolgt dabei durch eine Übertotpunktstellung des Exzenterhebels 101, so dass der Exzenterhebel 101 nicht selbsttätig zurückschwenken kann in eine Freigabestellung der Verdrehbremse 96. In der Freigabestellung (Fig. 25) ist der halbrunde Teil des Klemmbügels 97 von den Flanken des Gewindes der Gewindespindel 34 wegbewegt, so dass die Gewindespindel 34 relativ zum Verbindungsteil 38, aber auch zur Verdrehbremse 96, frei beweglich ist.

Die Verdrehbremse 96 kann alternativ auch an dem Anschlagstück 46 der Spannschraube 33 gemäß der Fig. 3 oder der Festmutter 41 der Spannschraube 33 gemäß der Fig. 2 angeordnet sein so wie es in der Fig. 26 gezeigt ist. Außerdem ist es möglich, die Verdrehbremse 96 einem zusätzlichen Kulissenstück zuzuordnen, das ähnlich wie das Kulissenstück 51 der Fig. 4 ausgebildet ist. Das Kulissenstück mit der Verdrehbremse 96 wird dann einer solchen Seite der Verschiebemutter 48 bzw. der Festmutter 41 zugeordnet, vorzugsweise einer Oberseite desselben, an der der unbelastete Endbereich 49 der Gewindespindel 34 aus der Verschiebemutter 48 oder der Festmutter 41 herausragt.

Die Fig. 27 zeigt die Anordnung der Verdrehbremse 96 am in der Fig. 27 unteren Ende eines Rohrs 108 zur Bildung des Verbindungsteils der Spannschraube 33. Dabei ist die Verdrehbremse 96 einer Festmutter 41 zugeordnet, die zur Bildung der in der Fig. 2 gezeigten Spannschraube 33 mit dem Ende des Rohrs 108 vorzugsweise durch Schweißen fest verbunden ist.

### Bezugszeichenliste

- 30: Container
- 31: Zurrstange
- 32: Eckbeschlag
- 33: Spannschraube
- 34: Gewindespindel
- 35: Gabelkopf
- 36: Haken
- 37: Zurrauge
- 38: Verbindungsteil
- 39: Gewinde
- 40: Stange
- 41: Festmutter
- 42: Gegenlager
- 43: Sitz
- 44: Verankerungsverdickung
- 46: Anschlagstück
- 47: Durchgangsbohrung
- 48: Verschiebemutter
- 49: oberer Endbereich
- 50: Verdrehsperre
- 51: Kulissenstück
- 52: Deckplatte
- 53: Kupplungsansatz
- 54: untere Stirnseite
- 55: Sackbohrung
- 56: Zylinderfortsatz
- 57: obere Stirnfläche
- 58: Anschlagschraube
- 59: Zylinderstift
- 60: Nut
- 61: federndes Druckstück
- 62: Nut
- 63: Stirnseite
- 64: Verdrehsperre
- 65: Begrenzungsstift
- 66: Durchgangsbohrung
- 67: Zylinderfortsatz
- 68: Nut
- 69: Verdrehsperre
- 70: Knebel
- 71: Gabel
- 72: Gabel
- 73: Zylinderfortsatz
- 74: Zylinderstift
- 75: Langloch
- 76: Gabelschenkel
- 77: Endfläche
- 78: obere Stirnfläche
- 79: Verdrehsperre
- 80: Schwenkarm
- 81: Ringbereich
- 82: Kragarm
- 83: obere Stirnfläche
- 84: Vorsprung
- 85: Unterseite
- 86: Erhöhung
- 87: Vorsprung
- 88: Vertiefung
- 89: Verdrehbremse
- 90: Schraube
- 91: Schraubenende
- 92: Schraube
- 93: Stirnseite
- 94: Sackbohrung
- 95: Verschleißteil
- 96: Verdrehbremse
- 97: Klemmbügel
- 98: Schenkel
- 99: Exzentertrieb
- 100: Exzenterwelle
- 101: Exzenterhebel
- 102: Gleitfläche
- 103: Lagerbock
- 104: Ausnehmung
- 105: Führungshülse
- 106: Führungshülse
- 107: Rohr
- 108: Rohr

## Patentansprüche

1. Vorrichtung zum Verzurren von insbesondere Containem (30) an mindestens einem Deck von Schiffen, mit einem Verbindungsteil (38), mindestens eine Gewindespindel (34) und eine lösbare Verdrehsicherung, wobei die Gewindespindel (34) durch Einschrauben in ein dem Verbindungsteil (38) zugeordnetes Gewinde (39) mit dem Verbindungsteil (38) verbindbar ist, **dadurch gekennzeichnet, dass** die Verdrehsicherung einem im Wesentlichen unbelasteten Bereich der Gewindespindel (34) zugeordnet ist.

2. Vorrichtung nach Anspruch 1, **dadurch gekennzeichnet, dass** die Verdrehsicherung einem in das Verbindungsteil (38) hineingeschraubten, im Wesentlichen zugunbelasteten Endbereich (49) der Gewindespindel (34), vorzugsweise einem Ende derselben, zugeordnet ist.

3. Vorrichtung nach Anspruch 1 oder 2, **dadurch gekennzeichnet, dass** die Verdrehsicherung als eine Verdrehsperre (50, 64, 69, 79) ausgebildet ist, die durch Formschluss ein Verdrehen der Gewindespindel (34) gegenüber dem Verbindungsteil (38) verhindert, wobei vorzugsweise die Verdrehsperre (50, 64, 69, 79) einem sich in das Verbindungsteil (38) hinein erstreckenden Ende, insbesondere einer Stirnfläche (57) der Gewindespindel (34), zugeordnet ist.

4. Vorrichtung nach einem der vorhergehenden Ansprüche, **dadurch gekennzeichnet, dass** die Verdrehsperre (50, 64) ein relativ zum Verbindungsteil (38) in Längsrichtung der Gewindespindel (34) verschiebbares Kulissenstück (51) aufweist, das am Verbindungsteil (38) verschiebbar, aber unverdrehbar, gelagert ist

5. Vorrichtung nach einem der vorhergehenden Ansprüche, **dadurch gekennzeichnet, dass** das Kulissenstück (51) mindestens einen Kupplungsansatz (53) mit wenigstens einem Vorsprung oder einer Vertiefung aufweist und das betreffende Ende der Gewindespindel (34) mit mindestens einem korrespondierenden Vorsprung oder eine korrespondierende Vertiefung versehen ist, wobei die oder jede Vertiefung oder der jeweilige Vorsprung der Gewindespindel (34) mit dem jeweiligen Vorsprung oder die oder jede Vertiefung des Kupplungsansatzes (53) des Kulissenstücks (51) in formschlüssigen Eingriff bringbar ist.

6. Vorrichtung nach einem der vorhergehenden Ansprüche, **dadurch gekennzeichnet, dass** der Verdrehsperre (50, 64) mindestens ein Arretierungsmittel (fedemdes Druckstück 61) zugeordnet ist, das in mindestens einer die Gewindespindel (34) unverdrehbar gegenüber dem Verbindungsteil (38) haltenden Sperrstellung arretiert und vorzugsweise auch in einer einer Verdrehung der Gewindespindel (34) gegenüber dem Verbindungsteil (38) zulassenden Freigabestellung arretierbar ist.

7. Vorrichtung nach Anspruch 1 oder 2, **dadurch gekennzeichnet, dass** die Verdrehsicherung als eine kraftschlüssig wirkende Verdrehbremse (89, 96) ausgebildet ist.

8. Vorrichtung nach Anspruch 7, **dadurch gekennzeichnet, dass** die Verdrehbremse (89, 96) einer das Gewinde (39) zum Hindurchschrauben der Gewindespindel (34) aufweisenden Verschiebemutter (48) oder dem Verbindungsteil (38) zugeordnet ist.

9. Vorrichtung nach Anspruch 7 oder 8, **dadurch gekennzeichnet, dass** die Verdrehbremse (89, 96) ein Klemmorgan aufweist, das etwa quer zur Längsachse der Gewindespindel (34) gerichtet auf dieselbe einwirkt und sich vorzugsweise an der Verschiebemutter (48) oder dem Verbindungsteil (38) abstützt.

10. Vorrichtung nach Anspruch 9, **dadurch gekennzeichnet; dass** das Klemmorgan als eine Schraube (90, 92) ausgebildet ist, die vorzugsweise mindestens teilweise aus einem weicheren Material als die Gewindespindel (34) gebildet ist.

11. Vorrichtung nach Anspruch 10, **dadurch gekennzeichnet, dass** die Schraube (92) mindestens an ihrem auf die Gewindespindel (34) einwirkenden Ende einen Verschleißabschnitt (Verschleißteil 95) aufweist, der vorzugsweise aus Kunststoff oder Gummi gebildet ist.

12. Vorrichtung nach Anspruch 9, **dadurch gekennzeichnet, dass** das Klemmorgan als ein die Gewindespindel (34) teilweise umgreifender Klemmbügel (97) ausgebildet ist, der vorzugsweise quer zur Längsachse der Gewindespindel (34) beweglich ist.

13. Vorrichtung nach Anspruch 12, **dadurch gekennzeichnet, dass** der Klemmbügel (97) durch einen sich vorzugsweise am Verbindungsteil (38) oder der Verschiebemutter (48) abstützenden Exzentertrieb (99) beweglich ist, vorzugsweise aus einer Freigabestellung in eine Bremsstellung und umgekehrt.

## Claims

1. Arrangement for lashing, in particular, containers (30) on at least one deck of ships, having a connecting part (38), at least one threaded spindle (34) and a releasable rotation-prevention means, it being possible for the threaded spindle (34) to be connected to the connecting part (38) by virtue of being screwed into a thread (39) assigned to the connecting part (38), **characterized in that** the rotation-prevention means is assigned to an essentially non-loaded region of the threaded spindle (34).

2. Arrangement according to Claim 1, **characterized in that** the rotation-prevention means is assigned to an end region (49) of the threaded spindle (34), which is screwed into the connecting part (38) and is essentially not subjected to tensile loading, preferably to one end of the threaded spindle.

3. Arrangement according to Claim 1 or 2, **characterized in that** the rotation-prevention means is designed as a rotary lock (50, 64, 69, 79) which uses form-fitting to prevent the threaded spindle (34) from rotating in relation to the connecting part (38), the rotary lock (50, 64, 69, 79) preferably being assigned to an end, in particular an end surface (57) of the threaded spindle (34), which extends into the connecting part (38).

4. Arrangement according to one of the preceding claims, **characterized in that** the rotary lock (50, 64) has a guide component (51) which can be displaced relative to the connecting part (38) in the longitudinal direction of the threaded spindle (34) and is mounted on the connecting part (38) such that it can be displaced but cannot be rotated.

5. Arrangement according to one of the preceding claims, **characterized in that** the guide component (51) has at least one coupling attachment (53) with at least one protrusion or a depression, and the relevant end of the threaded spindle (34) is provided with at least one corresponding protrusion or a corresponding depression, it being possible for the or each depression or the respective protrusion of the threaded spindle (34) to be brought into form-fitting engagement with the respective protrusion or the or each depression of the coupling attachment (53) of the guide component (51).

6. Arrangement according to one of the preceding claims, **characterized in that** the rotary lock (50, 64) is assigned at least one arresting means (resilient pressure-exerting component 61) which is arrested in at least one blocking position, in which the threaded spindle (34) is retained in a non-rotatable manner in relation to the connecting part (38), and can preferably also be arrested in a release position, which allows the threaded spindle (34) to be rotated in relation to the connecting part (38).

7. Arrangement according to Claim 1 or 2, **characterized in that** the rotation-prevention means is designed as a rotary brake (89, 96) with force-fitting action.

8. Arrangement according to Claim 7, **characterized in that** the rotary brake (89, 96) is assigned to the connecting part (38) or to a displacement nut (48) which has the thread (39) through which the threaded spindle (34) can be screwed.

9. Arrangement according to Claim 7 or 8, **characterized in that** the rotary brake (89, 96) has a clamping element which, directed approximately transversely to the longitudinal axis of the threaded spindle (34), acts on the latter and is preferably supported on the displacement nut (48) or the connecting part (38).

10. Arrangement according to Claim 9, **characterized in that** the clamping element is designed as a screw (90, 92) which is preferably formed, at least in part, from a softer material than the threaded spindle (34).

11. Arrangement according to Claim 10, **characterized in that**, at least at its end which acts on the threaded spindle (34), the screw (92) has a wearing section (wearing part 95) which is preferably formed from plastic or rubber.

12. Arrangement according to Claim 9, **characterized in that** the clamping element is designed as a clamping bracket (97) which partially engages around the threaded spindle (34) and can preferably be moved transversely to the longitudinal axis of the threaded spindle (34).

13. Arrangement according to Claim 12, **characterized in that** the clamping bracket (97) can be moved, preferably out of a release position into a braking position and vice versa, by an eccentric drive (99) which is preferably supported on the connecting part (38) or the displacement nut (48).

## Revendications

1. Dispositif pour amarrer notamment des conteneurs (30) sur au moins un pont de navires, comprenant une partie de connexion (38), au moins une broche filetée (34) et une fixation desserrable contre la rotation, la broche filetée (34) pouvant être connectée à la partie de connexion (38) par vissage dans un filetage (39) associé à la partie de connexion (38), **caractérisé en ce que** la fixation contre la rotation est associée à une région essentiellement non sollicitée de la broche filetée (34).

2. Dispositif selon la revendication 1, **caractérisé en ce que** la fixation contre la rotation est associée à une région d'extrémité (49) de la broche filetée (34), essentiellement non sollicitée en traction, vissée dans la partie de connexion (38), de préférence à une extrémité de la broche filetée.

3. Dispositif selon la revendication 1 ou 2, **caractérisé en ce que** la fixation contre la rotation est réalisée sous forme d'arrêt anti-rotation (50, 64, 69, 79), qui empêche, par engagement par coopération de forme, une rotation de la broche filetée (34) par rapport à la partie de connexion (38), l'arrêt anti-rotation (50, 64, 69, 79) étant de préférence associé à une extrémité s'étendant dans la partie de connexion (38), notamment une face frontale (57) de la broche filetée (34).

4. Dispositif selon l'une quelconque des revendications précédentes, **caractérisé en ce que** l'arrêt anti-rotation (50, 64) présente une pièce coulissante (51) déplaçable par rapport à la partie de connexion (38) dans la direction longitudinale de la broche filetée (34), laquelle est montée de manière déplaçable mais non rotative sur la partie de connexion (38).

5. Dispositif selon l'une quelconque des revendications précédentes, **caractérisé en ce que** la pièce coulissante (51) présente au moins un insert d'accouplement (53) avec au moins une saillie ou un renfoncement, et l'extrémité concernée de la broche filetée (34) est pourvue d'au moins une saillie correspondante ou d'un renfoncement correspondant, le ou chaque renfoncement ou la ou chaque saillie de la broche filetée (34) pouvant être amené(e) en prise par engagement par coopération de forme avec la saillie respective ou le ou chaque renfoncement de l'insert d'accouplement (53) de la pièce coulissante (51).

6. Dispositif selon l'une quelconque des revendications précédentes, **caractérisé en ce que** l'on associe à l'arrêt anti-rotation (50, 64) au moins un moyen de blocage (pièce de pression élastique 61), qui est bloquée dans au moins une position d'arrêt retenant la broche filetée (34) de manière solidaire en rotation par rapport à la partie de connexion (38) et qui peut de préférence aussi être bloquée dans une position de libération autorisant une rotation de la broche filetée (34) par rapport à la partie de connexion (38).

7. Dispositif selon la revendication 1 ou 2, **caractérisé en ce que** la fixation contre la rotation est réalisée sous la forme d'un frein anti-rotation (89, 96) agissant par engagement par adhérence.

8. Dispositif selon la revendication 7, **caractérisé en ce que** le frein anti-rotation (89, 96) est associé à un écrou de déplacement (48) présentant le filetage (39) pour le vissage de la broche filetée (34), ou à la partie de connexion (38).

9. Dispositif selon la revendication 7 ou 8, **caractérisé en ce que** le frein anti-rotation (89, 96) présente un organe de serrage qui est orienté approximativement transversalement à l'axe longitudinal de la broche filetée (34) et qui agit sur celle-ci, et qui s'appuie de préférence contre l'écrou de déplacement (48) ou la partie de connexion (38).

10. Dispositif selon la revendication 9, **caractérisé en ce que** l'organe de serrage est réalisé sous la forme d'une vis (90, 92) qui est formée de préférence au moins en partie d'un matériau plus tendre que la broche filetée (34).

11. Dispositif selon la revendication 10, **caractérisé en ce que** la vis (92) présente au moins sur son extrémité agissant sur la broche filetée (34) une portion d'usure (partie d'usure 95) qui est constituée de préférence de plastique ou de caoutchouc.

12. Dispositif selon la revendication 9, **caractérisé en ce que** l'organe de serrage est réalisé sous la forme d'un étrier de serrage (97) venant en prise partiellement autour de la broche filetée (34), lequel est de préférence déplaçable transversalement à l'axe longitudinal de la broche filetée (34).

13. Dispositif selon la revendication 12, **caractérisé en ce que** l'étrier de serrage (97) est déplaçable par un entraînement par excentrique (99) s'appuyant de préférence contre la partie de connexion (38) ou l'écrou de déplacement (48), de préférence d'une position de libération dans une position de freinage et inversement.
